# EUROPÄISCHE PATENTANMELDUNG

(11) **EP 0 525 436 A1**
(43) Veröffentlichungstag der Anmeldung: **03.02.1993**
(21) Anmeldenummer: 92111256.1
(22) Anmeldetag: 02.07.1992
(51) Int. Cl.: F16L 13/16, F16B 17/00

(54) **KLEMMRING**

(30) Priorität: 23.07.1991 DE 4124325
(71) Anmelder: Viessmann Werke GmbH & Co., D-35107 Allendorf (Eder) (DE)
(72) Erfinder: Strobl, Uwe, W-3554 Gladenbach (DE)
(74) Vertreter: Wolf, Günter, Dipl.-Ing.

(57) **Zusammenfassung**

Die Klemmring-Rohrverbindung ist für metallische Rohre (1, 2) mit überlappenden Rohrenden (1', 2') bestimmt, wobei auf die Rohrenden (1', 2') ein metallischer Klemmring (3) aufgedrückt ist, der innen einen konischen Eingangsabschnitt, einen zylindrischen, in bezug auf den Außendurchmesser des äußeren Rohrendes (1') durchmesserkleineren Mittelabschnitt (5) und einen konischen, sich verengenden Endabschnitt (6) aufweist. Um eine derartige Rohrverbindung gegen Verdrehung zu sichern, ist diese nach der Erfindung derart ausgebildet, daß der Endabschnitt (6) des Klemmringes (3) im Inneren mindestens an einer Stelle eine Ausnehmung (7) aufweist, deren größte radiale Tiefe (T) im Bereich zwischen dem Kleinst- und Größtdurchmesser (D₁, D₂) des Endabschnittes (6) liegt, und daß beide Rohrenden (1', 2') im Bereich der Ausnehmung (7) an diese angeformt sind.

## Beschreibung

Die Erfindung betrifft eine Klemmring-Rohrverbindung für metallische Rohre mit überlappenden Rohrenden gemäß Oberbegriff des Patentanspruches 1.

Derartige Klemmring-Rohrverbindungen sind bspw. nach der DE-A-38 37 359 bekannt und haben sich auch bewährt, wobei je nach Abdichtungserfordernis in die Rohrverbindung ein Spezialdichtungsmittel eingefügt wird. Da die beteiligten Elemente, nämlich die beiden sich überlappenden Rohrenden und der Klemmring, zylindrisch sind, ist die Verbindung gegen Torsionsbelastungen nicht sicher, d.h. das Spezialdichtungsmittel bricht bei entsprechender Torsionsbelastung auf, und die Rohrverbindung wird, ohne daß sie sich löst, undicht. Dies ist auch nicht durch die gemäß DE-A-38 37 359 vorgesehene spezielle Ausbildung des Klemmringes zu verhindern, gemäß der der Außenmantel des Klemmringes im mittleren Abschnitt gegenüber den im wesentlichen zylindrischen Endabschnitten eine umlaufende Einschnürung aufweisen soll, denn die sich beim Aufdrücken dadurch einstellende bauchartige Verformung erstreckt sich ebenfalls in Umfangsrichtung. Solche Torsionsbelastungen können insbesondere dann auftreten, wenn eines der Rohre oder beide Rohre hinter der Verbindungsstelle abgewinkelte Verläufe aufweisen, also ein Hebelarm entsteht, oder wenn die Rohre, was ja in der Regel irgendwo immer der Fall ist, mit Überwurfverschraubungen an entsprechenden Anschlußstutzen angeschlossen sind. Treten an solchen hebelwirksamen Rohrleitungen Belastungen auf oder wenn verschraubbare Leitungsanschlüsse gelöst werden müssen, wird zwangsläufig die Klemmring-Rohrverbindung entsprechend auf Torsion belastet, was bei entsprechend großer Belastung in der Regel deren Undichtwerden zur Folge hat.

Ausgehend von einer Klemmring-Rohrverbindung der gattungsgemäßen Art, liegt der Erfindung die Aufgabe zugrunde, diese mit einfachen Mitteln dahingehend zu verbessern, daß sich die beim Aufdrücken des Klemmringes erzeugbaren Verformungen an den Rohrenden nicht nur radial, sondern sich auch in Teilbereichen axial einstellen.

Diese Aufgabe ist mit einer Rohrverbindung der eingangs genannten Art nach der Erfindung durch die im Kennzeichen des Hauptanspruches angeführten Merkmale gelöst. Vorteilhafte Weiterbildungen ergeben sich nach den Unteransprüchen.

Durch diese erfindungsgemäße Ausbildung im Inneren des Endabschnittes des Klemmringes können sich die beteiligten Rohrenden beim Aufdrükken des Klemmringes unter Spannung stehend nach außen radial aufwölben, wobei sich aber die mindestens eine entstehende Welle, die in Draufsicht etwa Keilform hat, in axialer Richtung der Rohrverbindung erstreckt. Vorzugsweise werden mehrere solcher Ausnehmungen am Klemmring vorgesehen, und zwar an den Ecken eines gleichzeitigen Drei- bis Sechseckes, d.h., in gleichmäßiger Umfangsverteilung. Da sich die an beiden Rohrenden entstehenden Wellen nicht nur in Umfangsrichtung erstrecken, sondern auch in axialer Richtung, wirken diese quer gegen eine Torsion, d.h., eine solche Rohrverbindung ist absolut torsionssicher, der Spezialkleber kann nicht aufbrechen, und die Verbindung bleibt auch bei Torsionsbelastung dicht. Da beide Rohrenden beim Aufdrücken des Klemmringes unter beträchtlicher Radialspannung stehen, paßt sich auch das innere Rohrende, wie beobachtet werden konnte, zumindest weitgehend an die Ausnehmung im Klemmring an.

Die dafür erforderliche, mindestens eine Ausnehmung ist ganz einfach dadurch herzustellen, daß man den bekannten Klemmring im Bereich seines sich konisch verengenden Endabschnittes an einer, vorzugsweise mehreren Stellen entsprechend ausformt, bspw. zylindrisch mit einem Fingerfräser ausfräst, dessen Durchmesser wesentlich kleiner ist als der innere Kleinstdurchmesser des Endabschnittes. Eine spanlose, entsprechende Formgebung wäre aber auch möglich.

Zwar wird bei einer Klemmring-Rohrverbindung nach der DE-A-27 00 516, bei der ebenfalls der Klemmring axial auf die zu verbindenden rohrförmigen Teile aufgeschoben wird, durch die poligonale Gestaltung eines Teiles des einen Rohrendes (dort segmentförmige Rippen der Hülse) das innenliegende Rohr derart poligonal verformt, daß keine Torsion mehr stattfinden kann, aber im Gegensatz hierzu tritt jedoch erfindunsgemäß diese poligonale Verformung bei beiden sich überlappenden Rohrenden ein, wobei die formgebende Gestaltung durch den axial aufgeschobenen Klemmring selbst bewirkt wird.

Die erfindungsgemäße Klemmring-Rohrverbindung wird nachfolgend anhand der zeichnerischen Darstellung eines Ausführungsbeispieles näher erläutert.

Es zeigt schematisch
Fig. 1 die Rohrverbindung im Teilschnitt und Seitenansicht vor dem Zusammendrücken;
Fig. 2 die Rohrverbindung gemäß Fig. 1 nach dem Zusammendrücken;
Fig. 3,4 im Schnitt und in Ansicht einen Klemmring mit sechs Ausnehmungen;
Fig. 5,6 im Schnitt und in Ansicht einen Klemmring mit drei Ausnehmungen und
Fig. 7,8 stark vergrößert im Schnitt und in Ansicht den Bereich einer Ausnehmung.

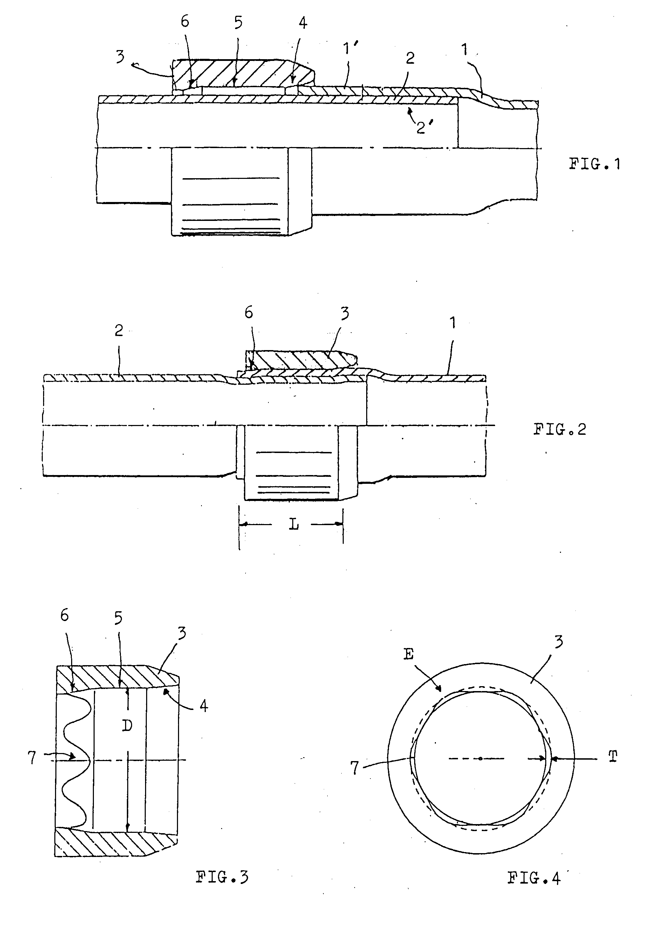

Bei der Klemmring-Rohrverbindung für metallische Rohre 1, 2 mit sich überlappenden Rohrenden 1', 2' ist auf diese ein metallischer Klemmring 3 aufgedrückt, der innen einen konischen Eingangsabschnitt 4, einen zylindrischen, in bezug auf den Außendurchmesser des äußeren Rohrendes durchmesserkleineren Mittelabschnitt 5 und einen konischen, sich verengenden Endabschnitt 6 aufweist (Fig. 1).

Für diese Rohrverbindung ist nun wesentlich, daß der Endabschnitt 6 des Klemmringes 3 im Inneren mindestens an einer Stelle eine Ausnehmung 7 aufweist, deren größte radiale Tiefe T im Bereich zwischen dem Kleinst- und Größtdurchmesser Di, D₂ des Endabschnittes 6 liegt (siehe Fig. 4), und daß beide Rohrenden 1', 2' im Bereich der Ausnehmung 7 an diese angeformt sind.

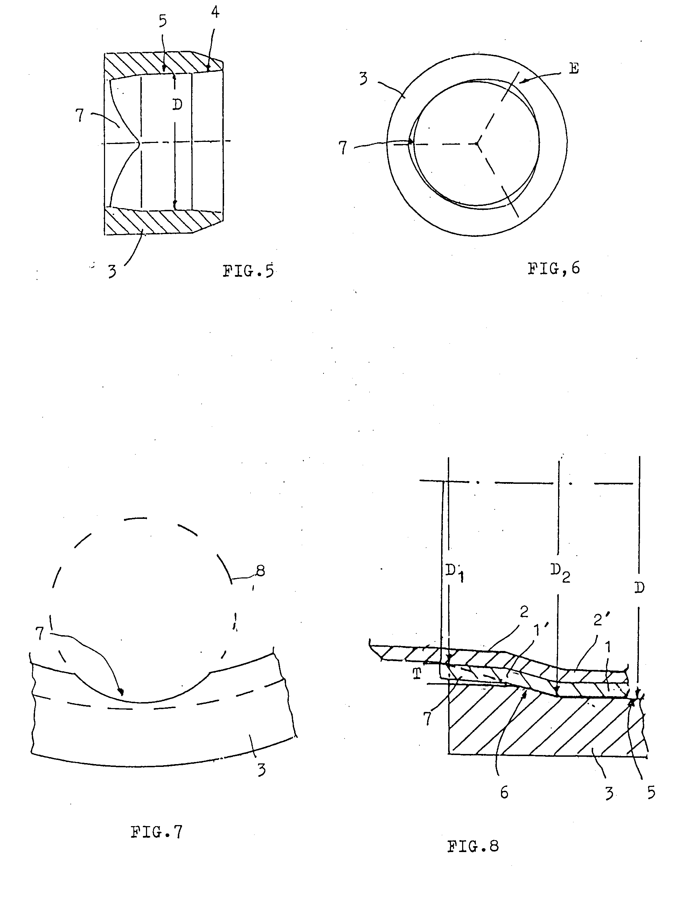

Beim Ausführungsbeispiel gemäß Fig. 3, 4 sind sechs und beim Ausführungsbeispiel gemäß Fig. 5, 6 sind nur drei Ausnehmungen 7 vorgesehen, die zweckmäßig und vorteilhaft an den Ecken E eines gleichseitigen Drei- bis Sechsecks angeordnet sind. Nach Aufdrücken bzw. Aufpressen des Klemmringes 3 stellt sich die Rohrverbindung im Sinne der Fig. 2 dar. Über die Länge L sind die beiden Rohrenden 1', 2' innerhalb des Klemmringes 3 in bezug auf ihren ursprünglichen Durchmesser etwas reduziert, und zwar in Abhängigkeit vom Innendurchmesser D des Mittelabschnittes 5 des Klemmringes. Da der Klemmring im Bereich des konischen Endabschnittes 6 mit den Ausnehmungen 7 versehen ist, wölben sich die Rohrenden 1', 2' in diesem Bereich, beim Aufdrücken des Klemmringes 3 und unter dessen Spannung stehend, in diese Ausnehmungen 7 hinein auf, welche Auswölbungen sich sowohl axial als auch radial erstrecken.

Wie ohne weiteres aus Fig. 7, 8 erkenn- und vorstellbar, ist damit aber eine Festlegung der beiden Rohrenden 1', 2' zueinander in Umfangsrichtung gegeben. Im Grunde genügt dafür schon die Anordnung einer Ausnehmung 7, vorteilhaft und in Abhängigkeit von der Größe der Rohre 1, 2 werden jedoch mehrere, gleichmäßig auf den Umfang des konischen Endabschnittes 6 verteilt mehrere Ausnehmungen 7 bspw. mit einem Fingerfräser 8 eingeschnitten. Die größte radiale Tiefe T der Ausnehmung 7 im Klemmring 3 hängt dabei ab von der gegebenen Konizität des Endabschnittes 6 im Klemmring 3.

## Patentansprüche

1. Klemmring-Rohrverbindung für metallische Rohre (1, 2) mit überlappenden Rohrenden (1', 2'), wobei auf die Rohrenden (1', 2') ein metallischer Klemmring (3) aufgedrückt ist, der innen einen konischen Eingangsabschnitt (4), einen zylindrischen, in bezug auf den Außendurchmesser des äußeren Rohrendes (1') durchmesserkleineren Mittelabschnitt (5) und einen konischen, sich verengenden Endabschnitt (6) aufweist,
dadurch gekennzeichnet,
daß der Endabschnitt (6) des Klemmringes (3) im Inneren mindestens an einer Stelle eine Ausnehmung (7) aufweist, deren größte radiale Tiefe (T) im Bereich zwischen dem Kleinst-und Größtdurchmesser (D₁, D₂) des Endabschnittes (6) liegt, und daß beide Rohrenden (1', 2') im Bereich der Ausnehmung (7) an diese angeformt sind.

2. Verbindung nach Anspruch 1,
dadurch gekennzeichnet,
daß die Ausnehmung (7) in Form eines Zylinderwandabschnittes ausgebildet ist.

3. Verbindung nach Anspruch 1 oder 2,
dadurch gekennzeichnet,
daß am Endabschnitt (6) die Ausnehmungen (7) an den Ecken (E) eines gleichseitigen Dreibis Sechsecks angeordnet sind.
